(19) Europäisches Patentamt
European Patent Office
Office européen des brevets

(11) Veröffentlichungsnummer: **0 042 481**
**B1**

(12) # EUROPÄISCHE PATENTSCHRIFT

(45) Veröffentlichungstag der Patentschrift: **19.12.84**

(51) Int. Cl.³: **C 08 C 19/28**

(21) Anmeldenummer: **81103223.4**

(22) Anmeldetag: **29.04.81**

(54) **Homo- und Copolymere von 1,3-Dienen mit reaktiven Silylgruppen, Verfahren zu ihrer Herstellung sowie deren Verwendung.**

(30) Priorität: **19.06.80 DE 3022898**
**30.07.80 DE 3028839**

(43) Veröffentlichungstag der Anmeldung: **30.12.81 Patentblatt 81/52**

(45) Bekanntmachung des Hinweises auf die Patenterteilung: **19.12.84 Patentblatt 84/51**

(84) Benannte Vertragsstaaten:
**AT BE CH DE FR GB IT LI NL SE**

(56) Entgegenhaltungen:
**FR-A- 2 242 407**
**FR-A- 2 360 613**
**US-A- 3 776 977**
**US-A- 3 920 714**
**Die Akte enthält technische Angaben, die nach dem Eingang der Anmeldung eingereicht wurden und die nicht in dieser Patentschrift enthalten sind.**

(73) Patentinhaber: **CHEMISCHE WERKE HÜLS AG**
**Postfach 1320**
**D-4370 Marl 1 (DE)**

(72) Erfinder: **Kampf, Wolfgang, Dr.**
**Im Wienäckern 60b**
**D-4358 Haltern (DE)**
Erfinder: **Streck, Roland D.**
**Leverkusener Strasse 12**
**D-4370 Marl (DE)**
Erfinder: **Haag, Horst-Guenther, Dr.**
**Wellerfeldweg 219**
**D-4370 Marl (DE)**

**EP 0 042 481 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Es ist bekannt, Ruße verschiedener Spezifikationen als Komponente von Kautschukmischungen zu verwenden. Des weiteren ist es bekannt, daß die Zugabe von Ruß weniger zum Zwecke der Verbilligung der aus dieser Mischung hergestellten Vulkanisate als vielmehr zur Anhebung des gesamten Niveaus der anwendungstechnischen Eigenschaften erfolgte. Hier sind vor allem Reißfestigkeit, Modul, Härte, Weiterreiß- und Abriebwiderstand zu nennen. Ruß ist also als ein sogenannter aktiver oder verstärkender Füllstoff zu bezeichnen.

Aus verschiedenen Gründen sind aber einer Verwendung von Ruß in Kautschukmischungen Grenzen gesetzt. Einerseits lassen sich mit ihm nur schwarze, jedenfalls keine farbigen oder weißen Mischungen herstellen. Andererseits sind gute Ruße gegenüber den wohlfeilen mineralischen Füllstoffen, wie Kieselsäure ($SiO_2$), Kaolin, Aluminiumhydroxid und Glas, so teuer geworden, daß ihr Ersatz durch die beispielhaft genannten hellen Füllstoffe in zunehmendem Maße angestrebt wird. Nicht zuletzt auch deswegen, weil durch eine solche Substitution der Anteil von Komponenten auf der Basis des versorgungskrisenabhängigen Rohöls verringert wird. Darüber hinaus ist für die Optimierung bestimmter Eigenschaften, wie z. B. die Kerbzähigkeit, der Einsatz hochaktiver Kieselsäuren von großem Vorteil.

Solche hellen mineralischen Füllstoffe sind bisher zwar schon verwendet worden, jedoch vorwiegend unter dem Gesichtspunkt der reinen Verbilligung, wobei man zunächst beträchtliche Einbußen der anwendungstechnisch wertvollen Eigenschaften, wie z. B. Wärmeabbau, Elastizität und Druckverformungsrest, in Kauf nehmen mußte. Ähnliche Probleme bestehen auch bei der Füllung bzw. Verstärkung von anderen polymeren Werkstoffen, beispielsweise Polyolefinen oder ungesättigten Polyesterharzen, mit mineralischen Füllstoffen.

Es ist bekannt, daß man diese Nachteile wenigstens teilweise durch die Verwendung sogenannter Haftvermittler beseitigen kann. Dabei handlet es sich — allgemein gesagt — um Substanzen, die sowohl zum Polymeren als auch zum Füllstoff eine gewisse Affinität besitzen, welche sich vorzugsweise in der Fähigkeit zu einer chemischen Reaktion mit den beiden Substraten äußert.

Als Haftvermittler besonders bekannt geworden ist die Gruppe der organofunktionellen Silane. Sie besitzen die allgemeine Formel $R{-}SiX_3$, wobei X meist eine Alkoxigruppe, seltener ein Halogenatom bedeutet und der organische Rest R eine durch eine funktionelle Gruppe substituierte Alkyl- oder Arylgruppe ist. Diese Verbindungen liefern zwar befriedigende Ergebnisse hinsichtlich der Eigenschaften mit ihrer Hilfe hergestellter Polymer-Füllstoff-Kombinationen, weisen aber einige Nachteile in der Anwendung auf. So sind verschiedene Silane in vulkanisierbaren Kautschuk-Füllstoff-Mischungen jeweils nur für eine bestimmte Art der Vernetzungstechnik optimal anwendbar. Auch gibt es z. B. bei den Mercaptosilanen Geruchsbelästigungen sowie eine Neigung der damit versetzten Mischungen zu vorzeitiger Vulkanisation (Scorch). Darüber hinaus sind organofunktionelle Silane im Vergleich zu den übrigen Komponenten der Gummimischung außerordentlich teuer und im allgemeinen von nicht zu vernachlässigender Toxizität hinsichtlich Inhalation und Hautkontakt.

Es hat weiterhin nicht an Versuchen gefehlt, solche Haftvermittler mit ähnlicher Wirkung auch auf polymerer Basis zu synthetisieren. So ist z. B. bekannt, daß Naturkautschuk und Styrol-Butadien-Kautschuk (SBR) durch Erhitzen mit Trichlorsilan auf ca. 300 °C hydrosiliert werden können (US-PS 2 475 122) und solche Reaktionsprodukte gut an Glasplatten haften (US-PS 2 557 778).

Die photochemisch bewirkte Hydrosilierung eines durch anionische Polymerisation erhaltenen flüssigen Polybutadiens wird in der US-PS 2 952 576 beschrieben, deren Gegenstand mit diesem Material beschichtete Glasfasern zur Verstärkung von ungesättigten Polyesterharzen sind. Die Mikrostruktur des verwendeten flüssigen Polybutadiens wird zwar nicht erwähnt ; aus den Angaben über seine Herstellung mittels Natriumsuspension läßt sich aber durch Vergleich mit Literaturangaben schließen, daß es etwa 60 bis 70 % Vinyl-Gruppen sowie 30 bis 20 % trans-Vinylen- sowie nur ca. 10 % cis-Vinylen-Gruppen enthält.

Die Katalyse der Hydrosilierung von Polybutadienen durch Platin-Verbindungen wird in den DE-OSS 16 20 934 und 17 20 527 als Zwischenstufe bei der Herstellung von Schaumstabilisatoren bzw. Laminierharzen beschrieben. Diese Offenlegungsgsschriften ist keine Lehre zur Anwendung der Reaktionsprodukte auf Kautschuk-Füllstoff-Mischungen zu entnehmen. Zudem handelt es sich wie oben in beiden Fällen um Produkte mit hohem Gehalt an Vinyl-Gruppen, während die restlichen Doppelbindungen überwiegend aus trans-Vinylen-Gruppen bestehen. Polybutadiene dieser Mikrostruktur besitzen selbst bei relativ niedrigen Molekulargewichten eine sehr hohe Viskosität bei Raumtemperatur ; ihre Handhabung, Dosierung und Einmischung wird durch diese Konsistenz außerordentlich erschwert. Die gleiche Einschränkung gilt für ihre hydrosilierten Derivate.

Die konventionelle Pt-Katalyse der Hydrosilierung wird auch in der US-PS 3 759 869 beschrieben, in der Polymere beansprucht werden, welche Molekulargewichte zwischen 500 und 50 000 besitzen und zu wenigstens 25 Gewichtsprozent die Struktur

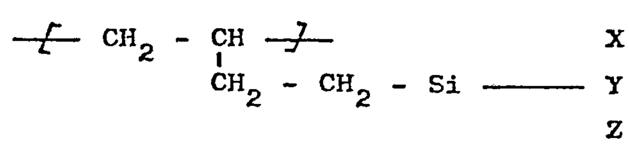

enthalten.

Dies entspricht in Falle eines reinen Polybutadiens als Basispolymer der Anbringung einer reaktiven Silylgruppe —$SiX_3$ an etwa jeder zehnten Monomereinheit. Aus den Beispielen ist nur die Hydrosilierung eines Polybutadiens mit einem durchschnittlichen Molekulargewicht von 1 000 und einem Vinyl-Gruppen-Gehalt von 90 %, bezogen auf gesamte Doppelbindungen, und zwar unter praktisch 100 %iger Absättigung sämtlicher vorhandenen Vinyl-Gruppen zu entnehmen. Mischungen solcher Produkte bzw. ihrer durch Folgereaktionen erhaltenen Derivate mit niedermolekularem Polypropylen (Molekulargewicht 5 000) bzw. EPM-Kautschuk werden lediglich erwähnt, ohne daß etwas über ihre Wirksamkeit ausgesagt wird. Zudem eignen sich solche weitestgehend abgesättigten Polybutadien-Derivate bzw. damit ausgerüstete Füllstoffe — allein aufgrund des Mangels an Doppelbindungen — nur schlecht für den Verbund mit einem durch Schwefel- oder Peroxid-Vulkanisation entstehenden Polymernetzwerk.

Die DE-OS 23 43 108 beansprucht die Hydrosilierung von Kautschukpolymeren, welche wenigstens vorzugsweise 5 bis 30 Gewichtsprozent Vinyl-Gruppen enthalten, und ihre Verwendung als Kupplungsmittel für die Vulkanisation eines ein kieselsäurehaltiges Pigment enthaltenden vulkanisierbaren Kautschuks. Es handelt sich um Produkte, die wegen ihres hohen Molekulargewichts nur in Lösung anwendbar sind.

Demgegenüber werden in der DE-AS 26 35 601 Hydrosilierungsprodukte spezieller Polybutadienöle mit Molekulargewichten von 400 bis 6 000 beschrieben, die dank ihrer Mikrostruktur (10 bis 60 % Vinyl-Gruppen, 1 bis 15 % trans-Vinylen- und 25 bis 85 % cis-Vinylen-Gruppen) besonders niedrige Viskositäten aufweisen und daher gut unverdünnt gehandhabt werden können. Den Hydrosilierungsprodukten haftet jedoch der Nachteil an, daß der meistens bei ihrer Herstellung verwendete Platinkatalysator weitgehend im Produkt verbleibt und damit verloren geht; darüber hinaus erfolgt dort die Hydrosilierung mit Verbindungen der Struktur H—Si—$X_3$.

Bekannt ist auch die Umsetzung von lithium-terminierten « lebenden Polymeren » mit einem Überschuß eines Tetrahalogeno- bzw. Tetraalkoxisilans gemäß dem Verfahren der US-PS 3 244 664. Dieser Überschuß, der zur Vermeidung von Kupplungs- bzw. Vernetzungsreaktionen angewandt werden muß, läßt sich praktisch nicht abtrennen und geht somit bei der weiteren Aufarbeitung verloren.

Die Addition von Sulfhydrylgruppen eines Mercaptosilans — z. B. des $\gamma$-Mercaptopropyltriethoxisilans — an Doppelbindungen eines ungesättigten Polymeren wurde mehrmals beschrieben (US-PS 3 440 302, DE-OSS 23 33 566 und 23 33 567), hat aber den Nachteil eines sehr teuren und übelriechenden Einsatzmaterials.

Weiterhin sind Verfahren bekannt, welche durch Verwendung von Silylgruppen haltigen Peroxi- (DE-OSS 21 52 295 und 21 52 286) bzw. Azo-Verbindungen (J. Appl. Pol. Sci *18*, 3259 (1974)) als Initiatoren oder von Silylgruppen haltigen Disulfiden (DE-OS 21 42 596) als Kettenüberträgern der radikalischen Polymerisation zu Polymeren mit reaktiven Silylgruppen führen. Auch hier trifft zu, daß die zur Einführung der Silylgruppen benutzten Hilfsstoffe schwierig zugänglich, sehr teuer und meist im Handel überhaupt nicht erhältlich sind. Außerdem lassen sich auf diesem Wege maximal zwei reaktive Silylgruppen — und zwar an den Enden der Polymerkette — einführen. Produkte mit höherem Siliciumgehalt, die zur Erzielung bestimmter Effekte, z. B. erhöhter Selbstvernetzung, erwünscht sein können, können also auf diesem Wege nicht hergestellt werden.

Silylgruppen haltige Polyalkenamere können zwar leicht durch Verwendung von Silylolefinen (DE-PS 21 57 405) bzw. Silylcycloolefinen (DE-AS 23 14 543) als Regler bzw. (Co-) Monomere bei der ringöffnenden Polymerisation von Cycloolefinen hergestellt werden; für die allgemeine Anwendung begrenzend ist jedoch auch hier die wirtschaftliche Verfügbarkeit der Reaktanten.

Aufgabe der vorliegenden Erfindung war es nun, Produkte zu entwickeln, die auf der Basis leich zugänglicher und wohlfeiler polymerer Ausgangsmaterialien, die in ihrer handelsüblichen Form direkt nach der Polymerisation eingesetzt werden können, ohne Verlust an wertvollen Edelmetallen oder die kostspielige Metallierung, unter vereinfachten Aufarbeitungsbedingungen und mit in weiten Grenzen variierbarem Gehalt an reaktiven Silylgruppen hergestellt werden können.

Diese Aufgabe wurde erfindungsgemäß gelöst durch reaktive Silylgruppen tragende Homo- oder Copolymere von 1,3-Dienen mit 0,4 bis 12 Gewichtsprozent gebundenem Silicium, die erhalten werden durch Umsetzung eines weniger als 1 % konjugierte Doppelbindungen enthaltenden 1,3-Dien-Homo- oder Copolymeren vom Molekulargewicht ($\bar{M}n$) 400 bis 8 000 mit einer Siliciumverbindung der allgemeinen Formel I

$$R-Si\begin{matrix}\diagup X\\ -Y\\ \diagdown Z\end{matrix}\;,$$

in der R ein ungesättigter (cyclo)-aliphatischer Kohlenwasserstoffrest mit 2 bis 20 Kohlenstoffatomen und X ein hydrolysierbarer Rest sind, Y und Z gleich X, Wasserstoff oder ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 150 bis 300 °C, gegebenenfalls in Gegenwart von die radikalische Polymerisation der ungesättigten Silane unterdrückenden Stabilisatoren, wie beispielsweise tert.-Butylbrenzcatechin oder Hydrochinon.

Ausgangsprodukte für die erfindungsgemäßen Silylgruppen tragenden Verbindungen sind somit einmal 1,3-Dien-Homo- und Copolymere mit Molekulargewichten ($\overline{M}n$) von 400 bis 8 000 sowie einem Gehalt an konjugierten Doppelbindungen von weniger als 1 % und zum anderen die ungesättigten Siliciumverbindungen der allgemeinen Formel I.

Unter Homo- und Copolymeren von 1,3-Dienen werden im Rahmen dieser Erfindung verstanden: Homopolymerisate von z. B. Butadien-(1,3), Isopren, 2,3-Dimethylbutadien und Piperylen, Copolymerisate dieser 1,3-Diene untereinander, Copolymerisate dieser 1,3-Diene mit vinylsubstituierten aromatischen Verbindungen, wie z. B. Styrol, α-Methylstyrol, Vinyltoluol und Divinylbenzol, sowie Reaktionsprodukte aus konjugierten 1,3-Dienen und aromatischen Kohlenwasserstoffen gemäß dem Verfahren der JP-OS 49-32985 und der deutschen Patentanmeldungen P 28 48 804.2 und P 30 00 708.0. Bevorzugt werden bei dem erfindungsgemäßen Verfahren Polybutadiene mit Molekulargewichten ($\overline{M}n$) von 600 bis 3 000 eingesetzt. Die Mikrostruktur der Diene in den Homo- und Copolymeren bzw. in den genannten Reaktionsprodukten ist nicht kritisch. Im allgemeinen werden Homo- oder Copolymere mit folgender Verteilung der Doppelbindungen eingesetzt:

0 bis 60 % Vinylgruppen
1 bis 25 % trans-Vinylen-Gruppen
5 bis 85 % cis-Vinylen-Gruppen.

Daneben können bis zu 40 % alicyclische Strukturen vorhanden sein.

Solche Produkte können nach vielen bekannten Verfahren des Standes der Technik (z. B. DE-PS 11 86 631, DE-AS 12 12 302, DE-PS 12 92 853, DE-OS 23 61 782 und DE-OS 23 42 885) hergestellt werden.

Erfindungsgemäß werden die reaktiven Silylgruppen durch Umsetzung mit einer Siliciumverbindung der allgemeinen Formel I in das 1,3-Dien-Homo- oder Copolymere eingeführt. In dieser allgemeinen Formel I steht R für einen ungesättigten aliphatischen Kohlenwasserstoffrest mit 2 bis 20, vorzugsweise 2 bis 6 Kohlenstoffatomen, und X für einen hydrolysierbaren Rest, wie z. B. Halogen, vorzugsweise Chlor und Brom, Alkoxyl, vorzugsweise mit bis zu 6 Kohlenstoffatomen, Aroxyl, vorzugsweise mit 6 bis 12 Kohlenstoffatomen, Carboxylat, vorzugsweise mit bis zu 8 Kohlenstoffatomen, Ketoximat, vorzugsweise mit bis zu 6 Kohlenstoffatomen in der Ketogruppe, oder Amid, mit vorzugsweise bis zu 12 Kohlenstoffatomen. Y und Z können gleich X sein, daneben aber auch Wasserstoff, ein Alkylrest mit 1 bis 8 Kohlenstoffatomen, ein Cycloalkylrest mit 5 bis 12 Kohlenstoffatomen oder ein gegebenenfalls substituierter Phenylrest.

Typische Vertreter der ungesättigten Organosilane sind beispielsweise Vinyltrichlorsilan, Vinyltrimethoxisilan, Vinyltriethoxisilan, Vinyltris(methoxiethoxi)silan, Vinylmethyldimethoxisilan, Vinyldimethylchlorsilan, Allylmethylbutylchlorsilan, Allylethyldibromsilan, Allyldimethylacetoxisilan, Allyltriisopropoxisilan, Allylphenyldiphenoxisilan, Methallylbutylchlorbromsilan, Crotylmethylpropyljodsilan, ω-Undecenylfluorchlorbromsilan, Octodecen-(9)-yl-triacetoxisilan und Vinyl-dimethylketosimatomethoxichlor-silan.

Bevorzugt sind Vinyl- und Allylsilane mit Halogenatomen oder Alkoxigruppen als abhydrolysierbaren Resten X, z. B. Vinyltrichlorsilan, Vinylmethyldichlorsilan, Vinylmethylethylchlorsilan, Vinyltrimethoxisilan, Vinyltriethoxisilan, Vinylmethyldibutoxisilan, Allyltribromsilan und Allylethymethoxi-propoxi-silan.

Unter den ungesättigten Halogensilanen sind wiederum die mit Chlor als Halogen bevorzugt, so daß beispielsweise Vinyltrichlorsilan, Vinylmethyldichlorsilan, Vinyldimethylchlorsilan und Allyltrichlorsilan besonders bevorzugte Vertreter darstellen.

Die mögliche Umwandlung der mit diesen Verbindungen eingebrachten Chlorsilyl-Gruppen in andere reaktive Silyl-Gruppen kann beispielsweise im Laufe der Aufarbeitung z. B. durch Zugabe von vorzugsweise Alkoholen, Trialkylorthoformiaten, Epoxiden, Natriumacetat usw. nach bekannten Reaktionen des Standes der Technik erfolgen. Eine derartige Umwandlung kann allerdings unterbleiben, wenn das flüssige Hydrosilierungsprodukt vorteilhafterweise direkt auf einen mineralischen Füllstoff aufgebracht wird und man für Beseitigung der bei dieser Reaktion freiwerdenden Salzsäure sorgt, die in diesem Falle als trockenes Chlorwasserstoffgas und nicht als Lösung in Alkohol oder Alkylchlorid anfällt, also weiter genutzt werden kann.

Aus der Verbindungsklasse der ungesättigten Alkoxisilane sind diejenigen mit Alkoxiresten von 1 bis 4 Kohlenstoffatomen besonders vorteilhaft, so daß Vinyltrimethoxisilan, Vinyltriethoxisilan, Vinyl-methoxi-diethoxi-silan, Vinylmethymethoxi-propoxi-silan, Allylpropylpropoxibutoxisilan als bevorzugte Vertreter gelten. Ganz besonders bevorzugt ist die Verwendung von Vinyltrimethoxisilan, Vinyltriethoxisilan, Vinylmethyldimethoxisilan und Vinylmethyldiethoxisilan.

Bei der Verwendung dieser ungesättigten Alkoxisilane ergibt sich der Vorteil, daß eine Aufarbeitung der Anlagerungsprodukte praktisch unterbleiben oder sich auf das Abdestillieren allenfalls anwesender Reste von unumgesetztem Alkenylalkoxisilan beschränken kann. Diese haben zwar keine nachteilige Wirkung auf die Eignung der Produkte als Haftvermittler, setzen aber wegen ihrer Flüchtigkeit den Flammpunkt derselben deutlich herab, wodurch einer der Vorteile der erfindungsgemäßen Produkte vermindert wird.

Die Anlagerungsreaktion zwischen den 1,3-Dien-Homo- oder Copolymeren und den ungesättigten Siliciumverbindungen der allgemeinen Formel I wird durch Erhitzen der Reaktanten auf Temperaturen

von 150 bis 300 °C, vorzugsweise von 200 bis 280 °C, unter Inertgas durchgeführt. Das ungesättigte Silan wird dabei im allgemeinen bis zu einem zehnfachen molaren Überschuß eingesetzt. Die Reaktionszeiten betragen je nach gewählter Reaktionstemperatur 1 bis 12 Stunden, vorzugsweise 3 bis 6 Stunden.

Für die Anlagerung ist erhöhter Druck nur insofern erforderlich, als der Dampfdruck des angelagerten ungesättigten Silans bei der gewählten Reaktionstemperatur > 1 bar beträgt. Die Anlagerung des ungesättigten Silans an das 1,3-Dien-Homo- oder Copolymere kann auch in Gegenwart eines organischen Lösemittels durchgeführt werden. Es ist jedoch in diesem Falle dafür Sorge zu tragen, daß die Apparatur für den sich gegebenenfalls aufbauenden Druck ausgelegt ist.

Die besonders niedrige Viskosität der einsetzbaren 1,3-Dien-Homo- und Copolymeren erleichtert sowohl die Durchführung der Anlagerungsreaktion, da diese dadurch im allgemeinen ohne Zusatz eines sonst erforderlichen Lösemittels durchgeführt werden kann, als auch die Aufarbeitung und die Handhabung der Anlagerungsprodukte. Die Arbeitsweise bei der Herstellung wird dadurch außerdem nicht nur wirtschaftlicher, sondern auch umweltfreundlicher, da Lösemittel weder verbraucht noch später an Abwasser oder Atmosphäre abgegeben werden müssen.

Die Aufarbeitung der reaktive Silylgruppen tragenden Homo- oder Copolymeren von 1,3-Dienen erfolgt — sofern überhaupt erforderlich — durch Abziehen von nicht umgesetztem Silan im Vakuum.

Der gewünschte Gehalt an gebundenem Silicium von 0,4 bis 12 Gewichtsprozent bzw. die angelagerte Menge an ungesättigtem Silan und damit die Anzahl der im Anlagerungsprodukt durchschnittlich vorhandenen reaktiven Silylgruppen läßt sich über die Menge des angebotenen Silans einstellen. Er richtet sich in erster Linie nach dem speziellen Verwendungszweck des Anlagerungsproduktes. So steigert eine Erhöhung des Gehaltes an reaktiven Silylgruppen die Reaktivität der Anlagerungsprodukte und ihre Neigung zur Ausbildung eines Netzwerkes von höherer Vernetzungsdichte durch Polykondensation der nach Hydrolyse entstandenen Silanolgruppen. Diese Eigenschaften können beispielsweise bei einer Reihe von Anwendungen der erfindungsgemäßen reaktive Silylgruppen tragende Homo- oder Copolymeren von 1,3-Dienen, z. B. auf dem Gebiet der Klebstoffe, Isolier- und Dichtungsmassen, wertvoll sein.

In erster Linie finden die erfindungsgemäßen Anlagerungsverbindungen jedoch Verwendung als Haftvermittler bei der Herstellung von Mischungen aus Polymeren, vorzugsweise Kautschuken, mineralischen Füllstoffen und gegebenenfalls weiteren Zusatzstoffen. Sie können dabei sowohl vor der Herstellung der Mischung in Substanz oder Lösung auf den mineralischen Füllstoff aufgebracht als auch während der Herstellung der Mischung dieser zugegeben werden.

Als mineralische Füllstoffe eignen sich beispielsweise Kieselsäuren ($SiO_2$) und Silicate (wie Kaolin, Talkum, Asbest, Glimmer, Glasfasern, Glaskugeln, synthetische CaMg- und Al-Silicate, Portland-Zement, Hochofenschlacke), Aluminiumhydroxid und -oxid (hydrat)e, Eisen(hydr)oxid(e).

Verwendbare Kautschuke sind alle üblichen, durch Peroxide bzw. Schwefel vulkanisierbaren Typen, wie beispielsweise Naturkautschuk, synth. Polyisopren, Polybutadien, Styrol-Butadien-Copolymere, Polyalkenamere (wie Polypentenamere, Polyoctenamere oder Polydodecenamere), Ethylen-Propylen-Copolymere (EPM), Ethylen-Propylen-Dien-Terpolymere (EPDM), Isobutylen-Isopren-Copolymere (Butylkautschuk), Butadien-Acrylnitril-Copolymere.

Außerdem sind auch andere Polymere — wie z. B. Polyethylen, Polypropylen, Polybutylen, Polyvinylchlorid, Ethylen-Vinylacetat-Copolymere, Polystyrol — gegebenenfalls unter Zusatz von Radikalbildnern, wie Dicumylperoxid, mit Hilfe der erfindungsgemäßen polymeren Haftvermittler durch mineralische Füllstoffe verstärkbar.

Weiterhin ist es möglich, die Silylgruppen tragenden Homo- und Copolymere von 1,3-Dienen auf alle genannten elastomere und thermoplastische Polymere durch radikalische Umsetzung aufzupfropfen. Dadurch wird den Umsetzungsprodukten die Fähigkeit zur Vernetzung durch Wasser verliehen. Gegebenenfalls können dabei Katalysatoren, wie sie bei der Silanolkondensation Verwendung finden, zugesetzt werden. Als solche kommen z. B. Di-n-butyl-zinn-dilaurat und Zinn (II)-octoat infrage.

Unter Zusatzstoffen, die den Mischungen aus Polymeren, vorzugsweise Kautschuken, mineralischem Füllstoff und erfindungsgemäßem Haftvermittler gegebenenfalls zugesetzt werden können, werden vor allem Vulkanisationsagenzien und Weichmacher verstanden.

Als Vulkanisationsagenzien kommen in erster Linie Schwefel in Kombination mit den bekannten Vulkanisationsbeschleunigern unter Zusatz von Zinkoxid und höheren Fettsäuren, wie z. B. Stearinsäure, infrage. Mit gleichem Erfolg sind auch Peroxide oder spezielle Schwefelspender, wie z. B. N,N'-Morpholindisulfid oder spezielle Thiurame zur Vernetzung möglich.

Als Weichmacher sind die bekannten Raffinerieprodukte zu nennen. Dabei können Öle mit vorwiegend aromatischen, naphthenischen oder paraffinischen Bestandteilen Verwendung finden. Des weiteren können selbstverständlich alle bekannte Alterungsschutzmittel beigefügt werden.

Die erfindungsgemäßen Produkte eignen sich ferner als Zusätze zur Verbesserung der Eigenschaften von Klebstoffen, Kitten, Dichtungs- und Spachtelmassen, als Mittel zur Dispergierung von Pigmenten, Hydrophobierung von Substraten wie Papier, Textilien, Holz, Karton und Baustoffen sowie zur Bodenverfestigung.

Alle Prozentangaben — auch in den nachfolgenden Beispielen, die die vorliegende Erfindung erläutern — sind, sofern nicht anders angegeben, Gewichtsprozente.

Als Test auf den Einbau des analytisch gefundenen Siliciums in das Polybutadienöl wird die

Vernetzbarkeit durch Wasser bestimmt. Dazu werden jeweils 2,0 g des Produktes in 40 ml Hexan gelöst, 1,0 ml einer 5 %igen Lösung von Dibutylzinndilaurat in Hexan zugesetzt und die Lösung auf Wasser in einer Schale (Oberfläche 600 $cm^2$) gegossen. Nach 24 stündigem Stehen bei Raumtemperatur hat sich ein fester Polymerfilm gebildet, dessen bei Raumtemperatur (25 °C) in Toluol unlösliche Anteile nach vorhergehendem Trocknen bestimmt werden.

I. Herstellung der erfindungsgemäßen Produkte

## Beispiel 1

150 g eines Polybutadienöls ($\overline{M}n$ 1 500 ; cis-1,4-Gehalt 72 %, Vinylgehalt < 1 %) wurden im Autoklaven unter Stickstoffatmosphäre zusammen mit 51 g Vinyltrichlorsilan 5 Stunden bei 225 °C gehalten. Während dieser Zeit wurde des Gemisch gerührt. Die Silanmenge entsprach bei vollständiger Anlagerung an das Polymere einem Si-Gehalt des Produktes von 4,41 % Si. Es resultierte nach anschließender einstündiger Vakuumbehandlung bei 130 °C ein Öl mit einem Si-Gehalt von 2,65 %, d. h. vom eingesetzten Vinyltrichlorsilan wurden 60,3 % addiert.

Der Vernetzungstest ergab 99 % unlösliche Anteile. Die gaschromatographisch ermittelten Restgehalte an Vinylsilan lagen hier wie auch bei den folgenden Beispielen < 0,1 %.

## Beispiele 2 bis 10

Jeweils 150 g des in Beispiel 1 als Ausgangsprodukt dienenden Polybutadienöls wurden bei den in der nachfolgenden Tabelle aufgeführten Bedingungen unter Stickstoffatmosphäre mit Vinyltrichlorsilan (VTClSi) funktionalisiert. Die analytischen Daten der Anlagerungsprodukte sind ebenfalls der Tabelle 1 zu entnehmen.

Tabelle 1

| Bsp. Nr. | VTClSi [g] | T [°C] | t [h] | Si-Gehalt [%] theoretisch | Si-Gehalt [%] gefunden | Gelgehalt [%] |
|---|---|---|---|---|---|---|
| 2 | 76,5 | 175 | 5 | 5,87 | 0,54 | 15 |
| 3 | 76,5 | 200 | 5 | 5,87 | 1,32 | 50 |
| 4 | 76,5 | 225 | 5 | 5,87 | 4,33 | 100 |
| 5 | 76,5 | 250 | 5 | 5,87 | 4,41 | 100 |
| 6 | 51 | 225 | 1 | 4,41 | 1,90 | 77 |
| 7 | 51 | 225 | 3 | 4,41 | 2,33 | 82 |
| 8 | 51 | 225 | 5 | 4,41 | 2,79 | 99 |
| 9 | 51 | 225 | 7,5 | 4,41 | 2,2 | 80 |
| 10 | 25,5 | 225 | 5 | 2,5 | 1,4 | 78 |

## Beispiel 11

Anstatt des im Beispiel 1 verwendeten Polybutadienöls wurde ein höhermolekulares Öl ($\overline{M}n$ 3 000) mit einem cis-1,4-Gehalt von 80 % und einem Vinylgehalt < 1 % eingesetzt. Bei analoger Durchführung der Versuche zu Beispiel 1, ausgenommen der auf 3 Stunden verkürzten Reaktionsdauer, resultierte ein Produkt mit 1,71 % Si, dessen Gelgehalt nach dem Vernetzungstest 82 % unlösliche Anteile ergab.

## Beispiele 12 und 13

Beispiel 1 wurde mit dem Unterschied wiederholt, daß anstatt des dort eingesetzten Polybutadienöls solche mit anderer Mikrostruktur verwendet wurden :

(Siehe Tabelle Seite 7 f.)

| Bsp. Nr. | $\overline{M}_n$ | Kenngrößen des Polybutadiens | | | | |
|---|---|---|---|---|---|---|
| | | Mikrostruktur [%] | | | | Bemerkungen |
| | | cis-1,4 | trans-1,4 | 1,2 | alicycl. | |
| 12 | 930 | 46 | 12 | 42 | 0 | Hergestellt gemäß DE-OS 23 61 782 |
| 13 | 860 | 10 | 15 | 45 | 33 | Handelsprodukt LITHENE® AL |

Die Herstellungsbedingungen und die Kenngrößen der silylierten Polybutadiene zeigt die nachfolgende Zusammenstellung :

| Bsp. Nr. | VTClSi [g] | T [°C] | t [h] | Si-Gehalt [%] theoretisch | Si-Gehalt [%] gefunden | Gelgehalt [%] |
|---|---|---|---|---|---|---|
| 12 | 51 | 225 | 3 | 4,41 | 2,9 | 97 |
| 13 | 51 | 225 | 5 | 4,41 | 2,4 | 66 |

Beispiel 14

Die Arbeitsweise von Beispiel 1 wurde mit 120 g Vinyltriethoxisilan anstelle von 51 g Vinyltrichlorsilan wiederholt. Nach 6 Stunden Reaktionszeit bei 250 °C wurde ein Produkt mit 2,47 % Si (theoretisch 5,55 %) erhalten, das beim Vernetzungstest 94 % unlösliche Anteile ergab. Das abdestillierte, nicht angelagerte Vinyltriethoxisilan hatte eine Reinheit von > 90 % (gaschromatographisch) und konnte erneut verwendet werden.

II. Anwendung der erfindungsgemäßen Produkte als Haftvermittler

Beispiel 15

Auf der Walze werden folgende Mischungen auf Basis von ungesättigtem Ethylen-Propylen-Kautschuk (EPDM) mit Ethyl-iden-norbornen als Terkomponente hergestellt :

Tabelle 2

| | Mischungs-Nr. 1 | 2 | 3 |
|---|---|---|---|
| | Gewichtsteile | | |
| EPDM statistischer Typ ML 1+4 (100 °C) = 70 | 100,0 | 100,0 | 100,0 |
| Zinkoxid | 5,0 | 5,0 | 5,0 |
| Stearinsäure | 2,0 | 2,0 | 2,0 |
| Kieselerde | 120,0 | 120,0 | 120,0 |
| naphth. Mineralölweichmacher | 25,0 | 25,0 | 25,0 |
| Produkt nach Beispiel 8 | - | 2,0 | - |
| Produkt nach Beispiel 14 | - | - | 2,0 |
| Benzothiazyl-2-cyclohexylsulfenamid | 2,0 | 2,0 | 2,0 |
| Tetramethylthiuramdisulfid | 1,0 | 1,0 | 1,0 |
| Schwefel | 1,5 | 1,5 | 1,5 |

Der Vulkanisationsverlauf dieser Mischungen wird mittels eines Zwick-Schwingelastometers bei 160 °C und einer Verformungsamplitude von 1° und 3 Schwingungen pro Minute bestimmt. Es werden folgende Meßergebnisse erhalten :

Tabelle 3

| | Mischungs-Nr. | | |
|---|---|---|---|
| | 1 | 2 | 3 |
| Zeit bis Vernetzungsumsatz von | | | |
| 10 %, $t_{10}$ (min) | 3,6 | 4,3 | 4,0 |
| 90 %, $t_{90}$ (min) | 19,2 | 12,3 | 12,3 |

Die Anvulkanisationszeit $t_{10}$ wird von den erfindungsgemäßen polymeren Siliciumverbindungen nur geringfügig beeinflußt. Die Ausvulkanisationszeit $t_{90}$ wird dagegen fast auf die Hälfte reduziert.

Die in der Presse 20 Minuten bei 160 °C vulkanisierten 4 mm-Prüfkörper werden folgenden Prüfungen unterzogen :

| Prüfung | Norm |
|---|---|
| Zugfestigkeit (MPa) | DIN 53 504 |
| Reißdehnung (%) | DIN 53 504 |
| Spannungswert (MPa) | DIN 53 504 |
| bleibende Dehnung (%) | interne Methode (Messung nach 1 Minute) |
| Weiterreißwiderstand (N/mm) nach Pohle | interne Methode (Ringprobe) |
| Härte (Shore A) | DIN 50 505 |
| Druckverformungsrest (%) | DIN 53 517 |

In der Tabelle 4 werden die Prüfergebnisse gegenübergestellt :

Tabelle 4

| | Vulkanisat-Nr. | | |
|---|---|---|---|
| | 1 | 2 | 3 |
| Zugfestigkeit | 3,8 | 8,1 | 8,4 |
| Reißdehnung | 444 | 362 | 374 |
| Spannungswert bei 300 % Dehn. | 2,6 | 7,4 | 7,5 |
| bleibende Dehnung | 23 | 10 | 10 |
| Weiterreißwiderstand | 8 | 14 | 13 |
| Härte | 61 | 64 | 64 |
| Druckverformungsrest 22 h bei 70 °C | 35 | 16 | 15 |

Die erfindungsgemäßen polymeren Siliciumverbindungen bewirken in schwefelvulkanisierten EPDM-Mischungen eine ausgeprägte Erhöhung der Vernetzungsdichte, die sich vor allem durch das starke Ansteigen des Spannungswertes und der Verringerung der bleibenden Dehnung sowie des Druckverformungsrestes äußert. Außerdem wird die Zugfestigkeit und der Weiterreißwiderstand deutlich erhöht.

Beispiel 16

Im Innenmischer werden folgende Mischungen auf Basis von Styrol-Butadien-Kautschuk (SBR) hergestellt :

(Siehe Tabelle 5 Seite 9 f.)

Tabelle 5

| | Mischungs-Nr. 4 | 5 |
|---|---|---|
| | Gewichtsteile | |
| SBR 1502 | 100,0 | 100,0 |
| Zinkoxid | 4,0 | 4,0 |
| Stearinsäure | 2,0 | 2,0 |
| hochdisperse, gefällte Kieselsäure | 50,0 | 50,0 |
| naphth. Mineralölweichmacher | 5,0 | 5,0 |
| Polywachs mit Molekulargewicht 4 000 | 2,0 | 2,0 |
| Produkt nach Beispiel 8 | - | 2,0 |
| Benzothiazyl-2-cyclohexylsulfenamid | 1,5 | 1,5 |
| Tetramethylthiuramdisulfid | 0,5 | 0,5 |
| Schwefel | 2,0 | 2,0 |

Die in der Presse 20 Minuten bei 150 °C vulkanisierten 4 mm-Prüfkörper werden entsprechend Beispiel 10 untersucht. In der Tabelle 6 werden die Prüfergebnisse gegenübergestellt :

Tabelle 6

| | Vulkanisat-Nr. 4 | 5 |
|---|---|---|
| Zugfestigkeit | 7,3 | 8,9 |
| Reißdehnung | 494 | 366 |
| Spannungswert bei 300 % Dehn. | 2,8 | 6,6 |
| bleibende Dehnung | 15 | 7 |
| Weiterreißwiderstand | 20 | 28 |
| Härte | 63 | 70 |

Bei Verwendung des erfindungsgemäßen Haftvermittlers wird gegenüber dem Vergleichsversuch ohne das erfindungsgemäße Produkte die Vernetzungsdichte deutlich erhöht. Die mechanischen Eigenschaften der Vulkanisate werden verbessert.

**Ansprüche** (für die Vertragsstaaten : BE, CH, DE, FR, GB, IT, LI, NL, SE)

1. Reaktive Silylgruppen tragende Homo- oder Copolymere von 1,3-Dienen, dadurch gekennzeichnet, daß sie

a) 0,4 bis 12 Gewichtsprozent gebundenes Silicium enthalten und

b) durch Umsetzung eines weniger als 1 % konjugierte Doppelbindungen enthaltenden 1,3-Dien-Homo- oder Copolymeren vom Molekulargewicht ($\bar{M}n$) 400 bis 8 000 mit einer Siliciumverbindung der allgemeinen Formel I

$$R - Si \begin{matrix} X \\ Y \\ Z \end{matrix} , \quad (I)$$

in der R ein ungesättigter (cyclo)-aliphatischer Kohlenwasserstoffrest mit 2 bis 20 Kohlenstoffatomen und X ein hydrolysierbarer Rest sind, Y und Z gleich X, Wasserstoff oder ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 150 bis 300 °C erhalten werden.

2. Verfahren zur Herstellung von reaktive Silylgruppen tragenden Homo- oder Copolymeren von 1,3-Dienen mit 0,4 bis 12 Gewichtsprozent gebundenem Silicium, dadurch gekennzeichnet, daß man ein 1,3-Dien-Homo- oder Copolymeres vom Molekulargewicht ($\bar{M}n$) 400 bis 8 000, das weniger als 1 % der aliphatischen Doppelbindungen in Konjugation enthält, mit einer Siliciumverbindung der allgemeinen Formel I

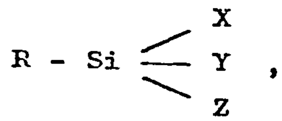 (I)

in der R ein ungesättigter aliphatischer Kohlenwasserstoffrest mit 2 bis 20 Kohlenstoffatomen und X ein hydrolysierbarer Rest sind, Y und Z gleich X, Wasserstoff oder ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 150 bis 300 °C umsetzt.

3. Verfahren nach Anspruch 2, dadurch gekennzeichnet, daß man die Umsetzung bei einer Temperatur von 200 bis 280 °C durchführt.

4. Verwendung der reaktive Silylgruppen tragenden 1,3-Dien-Homo- oder Copolymeren gemäß den Ansprüchen 1 und 2 als Haftvermittler bei der Herstellung von Mischungen aus Polymeren, mineralischen Füllstoffen und gegebenenfalls weiteren Zusatzstoffen.

5. Verwendung nach Anspruch 4, dadurch gekennzeichnet, daß man als Polymere natürliche und/oder synthetische Kautschuke einsetzt.

6. Verwendung der reaktive Silylgruppen tragenden 1,3-Dien-Homo- oder Copolymeren als Pfropfkomponente für die Herstellung von mit Wasser vernetzbaren Pfropfcopolymeren auf der Basis von elastomeren und thermoplastischen Polymeren.

**Ansprüche** (für den Vertragsstaat AT)

1. Verfahren zur Herstellung von reaktive Silylgruppen tragenden Homo- oder Copolymeren von 1,3-Dienen mit 0,4 bis 12 Gewichtsprozent gebundenem Silicium, dadurch gekennzeichnet, daß man ein 1,3-Dien-Homo- oder Copolymeres vom Molekulargewicht ($\bar{M}n$) 400 bis 8 000, das weniger als 1 % der aliphatischen Doppelbindungen in Konjugation enthält, mit einer Siliciumverbindung der allgemeinen Formel I

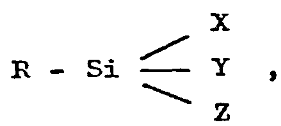 (I)

in der R ein ungesättigter aliphatischer Kohlenwasserstoffrest mit 2 bis 20 Kohlenstoffatomen und X ein hydrolysierbarer Rest sind, Y und Z gleich X, Wasserstoff oder ein Alkylrest mit 1 bis 8 Kohlenstoffatomen, ein Cycloalkylrest mit 5 bis 12 Kohlenstoffatomen oder ein gegebenenfalls substituierter Phenylrest sein können, bei einer Temperatur von 150 bis 300 °C umsetzt.

2. Verfahren nach Anspruch 1, dadurch gekennzeichnet, daß man die Umsetzung bei einer Temperatur von 200 bis 280 °C durchführt.

3. Verwendung der gemäß den Ansprüchen 1 und 2 hergestellten, reaktive Silylgruppen tragenden 1,3-Dien-Homo- oder Copolymeren als Haftvermittler bei der Herstellung von Mischungen aus Polymeren, mineralischen Füllstoffen und gegebenenfalls weiteren Zusatzstoffen.

4. Verwendung nach Anspruch 3, dadurch gekennzeichnet, daß man als Polymere natürliche und/oder synthetische Kautschuke einsetzt.

5. Verwendung der reaktive Silylgruppen tragenden 1,3-dien-Homo- oder Copolymeren als Pfropfkomponente für die Herstellung von mit Wasser vernetzbaren Pfropfcopolymeren auf der Basis von elastomeren und thermoplastischen Polymeren.

**Claims** (for the contracting States : BE, CH, DE, FR, GB, IT, LI, NL, SE)

1. A 1,3-diene homopolymer or copolymer bearing reactive silyl groups, characterised in that

a) it contains 0.4 to 12 wt % of combined silicon, and

b) it has been obtained by reaction at a temperature of 150 to 300 °C of a 1,3-diene homopolymer or copolymer having a molecular weight ($\bar{M}n$) of 400 to 8,000 and containing less than 1 % of conjugated double bonds with a silicon compound of the general formula I

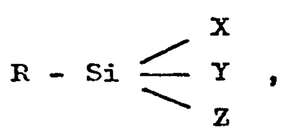 (I)

where R is an unsaturated aliphatic or cycloaliphatic hydrocarbon radical of 2 to 20 carbon atoms, X is a hydrolysable radical, and Y and Z have the same definition as X or can be hydrogen or alkyl of 1 to 8 carbon atoms or cycloalkyl of 5 to 12 carbon atoms or optionally substituted phenyl.

2. A process for the production of a 1,3-diene homopolymer or copolymer bearing reactive silyl groups and containing 0.4 to 12 wt.% of combined silicon, characterised in that a 1,3-diene homopolymer or copolymer which has a molecular weight ($\overline{M}n$) of 400 to 8,000 and contains less than 1 % of its aliphatic double bonds in conjugated form is reacted at a temperature of 150 to 300 °C with a silicon compound of the general formula I

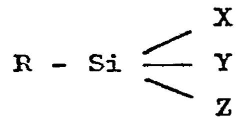 , (I)

where R is an unsaturated aliphatic hydrocarbon radical of 2 to 20 carbon atoms, X is a hydrolysable radical and Y and Z have the same definition as X or can be hydrogen or alkyl of 1 to 8 carbon atoms or cycloalkyl of 5 to 12 carbon atoms or optionally substituted phenyl.

3. A process according to claim 2, characterised in that the reaction is carried out at a temperature of 200 to 280 °C.

4. The use of a 1,3-diene homopolymer or copolymer bearing reactive silyl groups according to claim 1 or 2 as an adhesion promoter in the production of mixtures of polymers, mineral fillers and optionally further additives.

5. A use according to claim 4, characterised in that natural and/or synthetic rubber is used as the polymer.

6. The use of a 1,3-diene homopolymer or copolymer bearing reactive silyl groups as a grafting component for the production of graft copolymers based on elastomeric and thermoplastic polymers, which copolymers are crosslinkable with water.

**Claims** (for the contracting State AT)

1. A process for the production of a 1,3-diene homopolymer or copolymer bearing reactive silyl groups and containing 0.4 to 12 wt.% of combined silicon, characterised in that a 1,3-diene homopolymer or copolymer which has a molecular weight ($\overline{M}n$) of 400 to 8,000 and contains less than 1 % of its aliphatic double bonds in conjungated form is reacted at a temperature of 150 to 300 °C with a silicon compound of the general formula I

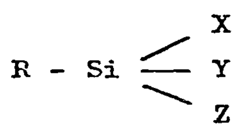 , (I)

where R is an unsaturated aliphatic hydrocarbon radical of 2 to 20 carbon atoms, X is a hydrolysable radical and Y and Z have the same definition as X or can be hydrogen or alkyl of 1 to 8 carbon atoms or cycloalkyl of 5 to 12 carbon atoms or optionally substituted phenyl.

2. A process according to claim 1, characterised in that the reaction is carried out at a temperature of 200 to 280 °C.

3. The use of a 1,3-diene homopolymer or copolymer bearing reactive silyl groups produced according to claim 1 or 2 as an adhesion promoter in the production of mixtures of polymers, mineral fillers and optionally further additives.

4. A use according to claim 3, characterised in that natural and/or synthetic rubber is used as the polymer.

5. The use of a 1,3-diene homopolymer or copolymer bearing reactive silyl groups as a grafting component for the production of graft copolymers based on elastomeric and thermoplastic polymers, which copolymers are crosslinkable with water.

**Revendications** (pour les Etats contractants : BE, CH, DE, FR, GB, IT, LI, NL, SE)

1. Homopolymères ou copolymères de 1,3-diènes portant des groupes silyle réactifs, caractérisés par le fait que

a) ils contiennent de 0,4 à 12 % en poids de silicium combiné et

b) on les obtient en faisant réagir à une température de 150 à 300 °C un homopolymère ou copolymère de 1,3-diène contenant moins de 1 % de doubles liaisons conjuguées et ayant un poids moléculaire ($\overline{M}n$) de 400 à 8 000 sur un composé de silicium de formule générale

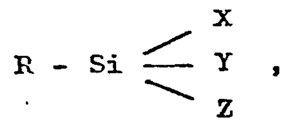 (I)

dans laquelle R est un radical hydrocarbure (cyclo)-aliphatique insaturé contenant de 2 à 20 atomes de carbone et X un radical hydrolysable, Y et Z peuvent être semblables à X ou être l'hydrogène, un radical alkyle contenant de 1 à 8 atomes de carbone, un radical cyclo-alkyle contenant de 5 à 12 atomes de carbone ou un radical phényle éventuellement substitué.

2. Procédé de préparation d'homopolymères ou copolymères de 1,3-diènes portant des groupes silyle réactifs et contenant de 0,4 à 12 % en poids de silicium combiné, caractérisé par le fait que l'on fait réagir à une température de 150 à 300 °C un homopolymère ou copolymère de 1,3-diène d'un poids moléculaire ($\overline{M}n$) de 400 à 8 000, qui contient moins de 1 % de doubles liaisons aliphatiques conjuguées, sur un composé de silicium de la formule générale I

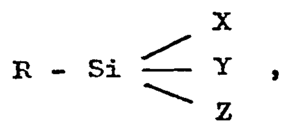 (I)

dans laquelle R est un radical hydrocarbure aliphatique insaturé contenant de 2 à 20 atomes de carbone et X un radical hydrolysable, Y et Z peuvent être semblables à X ou être l'hydrogène ou un radical alkyle contenant de 1 à 8 atomes de carbone, un radical cyclo-alkyle contenant de 5 à 12 atomes de carbone ou un radical phényle éventuellement substitué.

3. Procédé selon la revendication 2, caractérisé par le fait que l'on conduit la réaction à une température de 200 à 280 °C.

4. Utilisation des homopolymères ou copolymères de 1,3-diènes portant des groupes silyle réactifs selon les revendications 1 et 2 comme agents d'accrochage lors de la préparation de mélanges de polymères, de charges minérales et éventuellement d'autres additifs.

5. Utilisation selon la revendication 4, caractérisé par le fait que l'on utilise, comme polymères, des caoutchoucs naturels et/ou synthétiques.

6. Utilisation des homopolymères ou copolymères de 1,3-diènes portant des groupes silyle réactifs, comme constituants de greffage pour la préparation de copolymères greffés réticulables par l'eau, à base de polymères élastomères et thermoplastiques.

**Revendications** (pour l'Etat contractant AT)

1. Procédé de préparation d'homopolymères ou copolymères de 1,3-diènes portant des groupes silyle réactifs et contenant de 0,4 à 12 % en poids de silicium combiné, caractérisé par le fait que l'on fait réagir, à une température de 150 à 300 °C, un homopolymère ou copolymère de 1,3-diène d'un poids moléculaire ($\overline{M}n$) de 400 à 8 000, qui contient moins de 1 % de doubles liaisons aliphatiques conjuguées, sur un composé de silicium de formule générale I

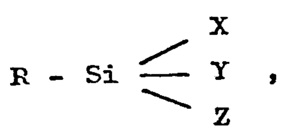 (I)

dans laquelle R est un radical hydrocarbure aliphatique insaturé contenant 2 à 20 atomes de carbone et X un radical hydrolysable, Y et Z peuvent être semblables à X ou être l'hydrogène, un radical cyclo-alkyle contenant 5 à 12 atomes de carbone ou un radical phényle éventuellement substitué.

2. Procédé selon la revendication 1, caractérisé par le fait que l'on conduit la réaction à une température de 200 à 280 °C.

3. Utilisation des homopolymères ou copolymères de 1,3-diènes portant des groupes silyle réactifs, préparés selon les revendications 1 et 2, comme agents d'accrochage lors de la préparation de mélanges de polymères, de charges minérales et éventuellement d'autres additifs.

4. Utilisation selon la revendication 3, caractérisée par le fait que l'on utilise, comme polymères, des caoutchoucs naturels et/ou synthétiques.

5. Utilisation des homopolymères ou copolymères de 1,3-diènes portant des groupes silyle réactifs comme constituant de greffage pour la préparation de copolymères greffés réticulables par l'eau, à base de polymères élastomères et thermoplastiques.